# EUROPEAN PATENT SPECIFICATION

(11) **EP 2 328 217 B1**
(45) Date of publication and mention of the grant of the patent: **05.06.2019**
(21) Application number: 10193010.5
(22) Date of filing: 29.11.2010
(51) Int. Cl.: H01M 4/70, H01M 4/72, H01G 11/70, H01G 11/76, H01G 11/72

(54) **Reserve power supply with electrode plates clipping with auxiliary conductors**
Reservestromversorgung mit Elektrodenplattenbegrenzung mit Hilfsleitern
Alimentation électrique de réserve avec coupure de plaques à électrodes avec conducteurs auxiliaires

(30) Priority: 30.11.2009 US 627181
(43) Date of publication of application: 01.06.2011
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- US-A1- 2006 226 757
- US-A1- 2008 318 126
- US-A1- 2009 029 260
- US-A1- 2009 263 709

## Description

### BACKGROUND OF THE INVENTION

### (a) Field of the Invention

The present invention relates to a reserve power supply with electrode plates clipping with auxiliary conductors, whose mainly structural figure is installed with auxiliary conductors, wherein one or more electrode plates, which are installed with collecting current terminals at two or more sides thereof, clipping with an auxiliary conductor, which is flat shape, strip, or mesh structure, and is made of the material and/or structure with conductivity better than that of the electrode plates; in which collecting current terminals are installed at two or more sides of the auxiliary conductor, for unilateral or multilateral parallel linking with the collecting current terminals installed at two or more sides of the electrode plates, and which are used to be the general collecting current terminals to output current to the external part or to receive the input current from the external part; and there are insulators installed between the auxiliary conductor and the electrode plates to constitute an electrode unit; the number of the above general collecting current terminals for inputting/outputting the collection current is one or more.

### (b) Description of the Prior Art

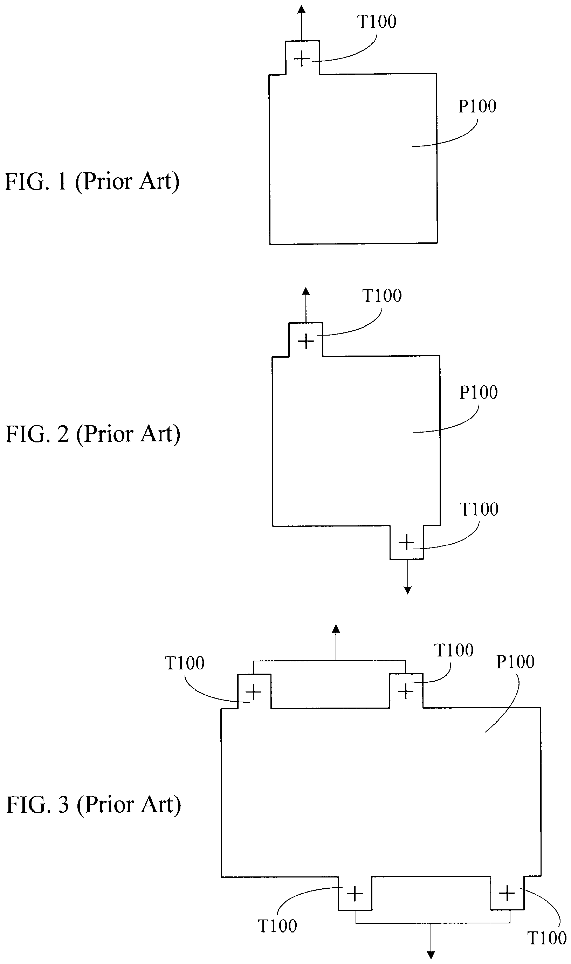

The conventional reserve power supply, such as a variety of primary batteries, rechargeable batteries, capacitors, or super capacitors, whose electrode plate is usually installed with one or more collecting current terminals with same polarity at single side; Fig. 1 is a schematic view showing an embodiment of conventional electrode plate unilaterally installed with a collecting current terminal, in which each electrode plate (P100) is unilaterally installed with a collecting current terminal (T100) for the electrode plate performing the collecting current function of inputting/outputting current, or for connecting with another electrode plate in series or parallel; because the electrode plate is only unilaterally installed with a collecting current terminal for inputting/outputting current, the current density on the electrode plate is uneven at the electrode plate region of the neighboring collecting current terminal, another side of the electrode plate, and the electrode plate region more far away from the collecting current terminal (T100), when large current inputs or outputs; if two or more collecting current terminals are installed at same side of the electrode plate, which is more progressive, the electrode plate will have two or more pathways for inputting/outputting current, and two or more collecting current terminals with same polarity are linked in parallel through linking a conductor; but, this way only improves the uniformity of the input/output current density at same side, and it is useless to the uneven input/output current density at another side of the electrode plate.

In addition, one or more collecting current terminals, which are individually outward extended, are installed at two or more sides of the electrode plate for improvement; Fig. 2 is a schematic view showing an embodiment, in which the two sides of the electrode plate are individually installed with a collecting current terminal; or one or more sides of the electrode plate (PI00) are installed with two or more collecting current terminals (T100) for forming two or more pathways for inputting/outputting current to reduce the resistance; Fig. 3 is a schematic view showing that two collecting current terminals are installed at each of the opposite sides of the electrode plate; although the ways shown in Fig. 2 and Fig. 3 improve the uniformity of the input/output current density, there is still inconvenient to use with input/output terminals installed at two sides.

US patent application 2009/029260 relates to an electrochemical device, such as a secondary battery, in which alternate electrodes and separators are alternatively laminated, with a sealing member covering the periphery and a method of manufacturing the same.

### SUMMARY OF THE INVENTION

In a first embodiment of the present invention, which is defined in the appended claims, there is provided a reserve power supply comprising: a pair of electrode plates, each plate including collecting current terminals at two or more sides thereof; an auxiliary conductor disposed between the pair of electrode plates, and including collecting current terminals at two or more sides thereof; and an insulator disposed between the auxiliary conductor and the electrode plates; wherein corresponding collecting current terminals of the plates and collecting current terminals of the auxiliary conductor (100, 1001, 1002) are connected together.

The present invention relates to a reserve power supply with electrode plates clipping with auxiliary conductors, which is applied to the desired positive and negative electrodes of reserve power supplies such as primary batteries, rechargeable batteries, capacitors, or super capacitors, or of fuel cells with electrode plates; the above device is installed with anode auxiliary conductors, wherein one or more anode electrode plates, which are installed with at least one collecting current terminals at each of two or more sides thereof, clipping with an anode auxiliary conductor, which is flat shape, strip, or mesh structure, and is made of the material and/or structure with conductivity better than that of the electrode plates; in which at least one collecting current terminals are installed at each of two or more sides of the anode auxiliary conductor, for unilateral or multilateral parallel linking with the collecting current terminals installed at two or more sides of the anode electrode plates, and which are used to be the anode general collecting current terminals to output current to the external part or to receive the input current from the external part; and there are insulators installed between the anode auxiliary conductor and the anode electrode plates to constitute a positive electrode unit; the number of the above anode general collecting current terminals for inputting/outputting the collection current is one or more.

Also, the above device is installed with cathode auxiliary conductors, wherein one or more cathode electrode plates, which are installed with at least one collecting current terminals at each of two or more sides thereof, clipping with an cathode auxiliary conductor, which is flat shape, strip, or mesh structure, and is made of the material and/or structure with conductivity better than that of the electrode plates; in which at least one collecting current terminals are installed at each of two or more sides of the cathode auxiliary conductor, for unilateral or multilateral parallel linking with the collecting current terminals installed at two or more sides of the cathode electrode plates, and which are used to be the cathode general collecting current terminals to output current to the external part or to receive the input current from the external part; and there are insulators installed between the cathode auxiliary conductor and the cathode electrode plates to constitute a negative electrode unit; the number of the above cathode general collecting current terminals for inputting/outputting the collection current is one or more.

### BRIEF DESCRIPTION OF THE DRAWINGS

Fig. 1 is a schematic view showing an embodiment of conventional electrode plate unilaterally installed with a collecting current terminal;
Fig. 2 is a schematic view showing an embodiment of conventional electrode plate installed with a collecting current terminal at each of two sides;
Fig. 3 is a schematic view showing an embodiment of conventional electrode plate installed with two collecting current terminals at each of the opposite sides;
Fig. 4 is a schematic view showing three-dimensional structure of a electrode unit constituted by an auxiliary conductor, in which at least one collecting current terminal is installed at each of at least two sides thereof, clipped by two electrode plates with same polarity, in which at least one collecting current terminal is installed at each of at least two sides thereof, at two laterals of the auxiliary conductor, and an insulator sandwiched therein, respectively, according to the present invention;
Fig. 5 is a front view of Fig. 4;
Fig. 6 is a side view of Fig. 4;
Fig. 7 is a schematic exploded view showing an embodiment, in which an electrode pair of a reserve power supply is constituted by a positive electrode unit composed of two anode electrode plates (1011) clipping with an anode auxiliary conductor (1001), a negative electrode unit composed of two cathode electrode plates (1012) clipping with a cathode auxiliary conductor (1002), and an isolated body sandwiched therein;
Fig. 8 is a schematic view showing an embodiment of combination of the electrode pair constituting the reserve power supply shown in Fig. 7;
Fig. 9 is a schematic view showing the reserve power supply constituted by the electrode pair shown in Fig. 8 and the current paths thereof;
Fig. 10 is a schematic view showing an embodiment of combination of two negative electrode units clipping with a positive electrode unit at two laterals thereof, according to the present invention;
Fig. 11 is a schematic view showing an embodiment of combination of two positive electrode units clipping with a negative electrode unit at two laterals thereof, according to the present invention;
Fig. 12 is a schematic view showing the second embodiment of combination of two negative electrode units clipping with a positive electrode unit at two laterals thereof, according to the present invention;
Fig. 13 is a schematic view showing the second embodiment of combination of two positive electrode units clipping with a negative electrode unit at two laterals thereof, according to the present invention;

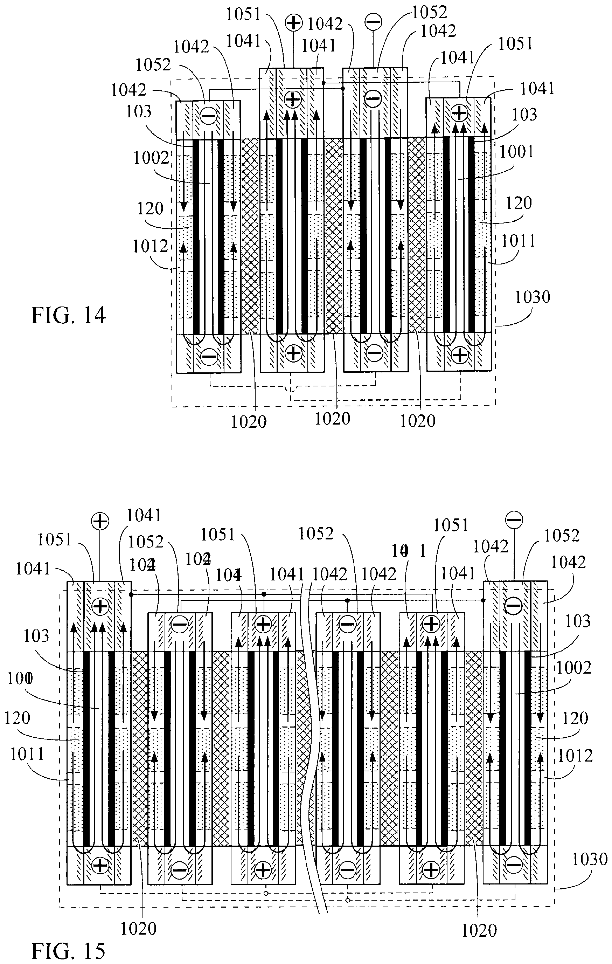

Fig. 14 is a schematic view showing an embodiment of further combination of at least two negative electrode units and at least two positive electrode units staggered placed for unilateral or bilateral parallel connecting the same polarity ones in an electrode tank, in which an anode input/output general collecting current terminal 1051 of the positive electrode unit and a cathode input/output general collecting current terminal 1052 of the negative electrode unit, placed at intermediate portion, are used to be the general collecting current terminals for inputting/outputting current, according to the present invention;
Fig. 15 is a schematic view showing the second embodiment of combination of electrode units with same polarity for unilateral or bilateral parallel connection in an electrode tank, in which the anode input/output general collecting current terminal 1051 of the positive electrode unit and the cathode input/output general collecting current terminal 1052 of the negative electrode unit, placed at two laterals, are used to be the general collecting current terminals for inputting/outputting current, according to the present invention;
Fig. 16 is a schematic view showing the third embodiment of combination of at least two negative electrode units and at least two positive electrode units staggered placed, in which the anode input/output general collecting current terminal 1051 of the positive electrode unit and the cathode input/output general collecting current terminal 1052 of the negative electrode unit, placed at intermediate portion, are used to be the general collecting current terminals for inputting/outputting current, according to the present invention;
Fig. 17 is a three-dimensional schematic view showing the exploded structure of Fig. 16;
Fig. 18 is a three-dimensional schematic view showing the composition of Fig. 16;
Fig. 19 is a schematic view showing an embodiment of combination of electrode pairs constituted by positive and negative electrodes for staggered parallel superposition, in which the positive-negative electrode pair is clipped therein, according to the present invention;
Fig. 20 is a schematic view showing the second embodiment of combination of negative electrode units and positive electrode units for staggered placement, in which the anode input/output general collecting current terminal 1051 of the positive electrode unit and the cathode input/output general collecting current terminal 1052 of the negative electrode unit, placed at two laterals, are used to be the general collecting current terminals for inputting/outputting current;
Fig. 21 is a schematic view showing the third embodiment of combination of negative electrode units and positive electrode units for staggered placement, in which the anode input/output general collecting current terminal 1051 of the positive electrode unit and the cathode input/output general collecting current terminal 1052 of the negative electrode unit, placed at intermediate portion, are used to be the general collecting current terminals for inputting/outputting current;

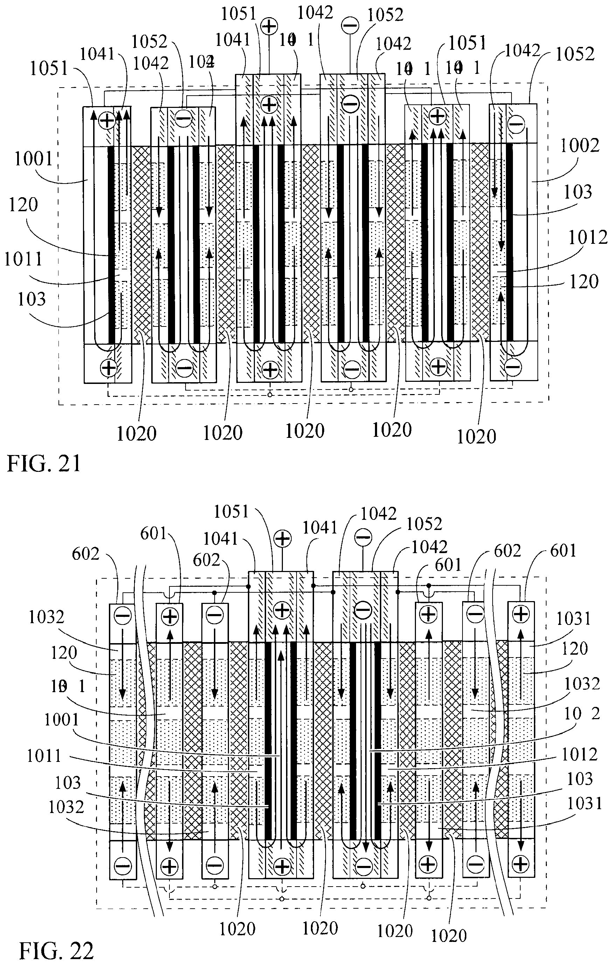

Fig. 22 is a schematic view showing the combination of the electrode pair constituted by at least one positive electrode unit and at least one negative electrode unit, in which the polarities of two laterals, the monolithic positive polarity electrode plate, and the monolithic negative polarity electrode plate are staggered superposition, and the anode input/output general collecting current terminal 1051 of the positive electrode unit and the cathode input/output general collecting current terminal 1052 of the negative electrode unit, placed at intermediate portion, are used to be the general collecting current terminals for inputting/outputting current;
Fig. 23 is a schematic view showing an embodiment of combination, in which a number of electrode pairs constituted by positive-negative electrode units placed in individual electrode tank 1030 are unilateral or multilateral connected in series by different polarity;
Fig. 24 is a schematic view showing the second embodiment of combination shown in Fig. 23, in which except for the anode input/output general collecting current terminal and the cathode input/output general collecting current terminal, which are used to input/output current, are exposed to the outside of the tank shell of the electrode tank 1030, the other collecting current terminals are hidden within the electrode tank 1030;
Fig. 25 is a schematic view showing an embodiment of combination, in which a number of electrode pairs constituted by positive-negative electrode units placed at individual electrode tank 1030 are unilateral or multilateral connected in series by different polarity;
Fig. 26 is a schematic view showing the second embodiment of combination shown in Fig. 25, in which except for the current terminals, which are used to input/output current, are exposed to the outside of the tank shell, the other collecting current terminals are hidden within the electrode tank 1030;
Fig. 27 is a three-dimensional structural schematic view showing the electrode unit constituted by the auxiliary conductor, in which two input/output collecting current terminals are installed at each of two sides thereof, clipped by the electrode plate(s) with same polarity, in which two collecting current terminals are installed at each of two sides thereof, at one of two or two outer sides of the auxiliary conductor, and an insulator sandwiched therein, respectively, according to the present invention;
Fig. 28 is a front view of Fig. 27;
Fig. 29 is a side view of Fig. 27;
Fig. 30 is a three-dimensional structural schematic view showing the electrode unit constituted by the auxiliary conductor, in which a collecting current terminal is installed at each of four sides thereof, clipped by the electrode plate(s) with same polarity, in which a collecting current terminal is installed at each of four sides thereof, at one of two or two outer sides of the auxiliary conductor, and an insulator sandwiched therein, respectively, according to the present invention;
Fig. 31 is a front view of Fig. 30;
Fig. 32 is a side view of Fig. 30;
Fig. 33 is a three-dimensional structural schematic view showing the electrode unit constituted by the auxiliary conductor, in which two collecting current terminals are installed at each of four sides thereof, clipped by the electrode plate(s) with same polarity, in which two collecting current terminals are installed at each of four sides thereof, at one of two or two outer sides of the auxiliary conductor, and an insulator sandwiched therein, respectively, according to the present invention;
Fig. 34 is a front view of Fig. 33;
Fig. 35 is a side view of Fig. 33;
Fig. 36 is a schematic structural view showing an embodiment of application, in which the conductor is radial and the electrode unit is grid layout, according to the present invention;
Fig. 37 is a front view of Fig. 36;
Fig. 38 is a side view of Fig. 36;
Fig. 39 is a schematic structural view showing an embodiment of application, in which the electrode unit is plate type, according to the present invention;
Fig. 40 is a front view of Fig. 39;
Fig. 41 is a side view of Fig. 39;
Fig. 42 is a schematic view showing an embodiment of application, in which the electrode unit is used to be a winding type reserve power supply, according to the present invention;
Fig. 43 is a top view of Fig. 42; and
Fig. 44 is a side view of Fig. 42.

### DESCRIPTION OF MAIN COMPONENT SYMBOLS

P100: Electrode plate
T100: Collecting current terminal
100: Auxiliary conductor
101: Side electrode plate
103: Insulator
104: Collecting current terminal
105: Input/output general collecting current terminal
120: Active substance
601: Collecting current terminal of the monolithic anode electrode plate 1031
602: Collecting current terminal of the monolithic cathode electrode plate 1032
1001: Anode auxiliary conductor
1002: Cathode auxiliary conductor
1011: Anode side electrode plate
1012: Cathode side electrode plate
1020: Isolated body
1030: Electrode tank
1031: Monolithic anode electrode plate
1032: Monolithic cathode electrode plate
1041: Anode collecting current terminal
1042: Cathode collecting current terminal
1051: Anode input/output general collecting current terminal
1052: Cathode input/output general collecting current terminal

### DETAILED DESCRIPTION OF THE PREFERRED EMBODIMENTS

The conventional reserve power supply, such as a variety of primary batteries, rechargeable batteries, capacitors, or super capacitors, whose electrode plate is usually installed with one or more collecting current terminals with same polarity at single side; Fig. 1 is a schematic view showing an embodiment of conventional electrode plate unilaterally installed with a collecting current terminal, in which each electrode plate (P100) is unilaterally installed with a collecting current terminal (T100) for the electrode plate performing the collecting current function of inputting/outputting current, or for connecting with another electrode plate in series or parallel; because the electrode plate is only unilaterally installed with a collecting current terminal for inputting/outputting current, the current density on the electrode plate is uneven at the electrode plate region of the neighboring collecting current terminal, another side of the electrode plate, and the electrode plate region more far away from the collecting current terminal (T100), when large current inputs or outputs; if two or more collecting current terminals are installed at same side of the electrode plate, which is more progressive, the electrode plate will have two or more pathways for inputting/outputting current, and two or more collecting current terminals with same polarity are linked in parallel through linking a conductor; but, this way only improves the uniformity of the input/output current density at same side, and it is useless to the uneven input/output current density at another side of the electrode plate.

In addition, one or more collecting current terminals, which are individually outward extended, are installed at two or more sides of the electrode plate for improvement; Fig. 2 is a schematic view showing an embodiment, in which the two sides of the electrode plate are individually installed with a collecting current terminal; or one or more sides of the electrode plate (P100) are installed with two or more collecting current terminals (T100) for forming two or more pathways for inputting/outputting current to reduce the resistance; Fig. 3 is a schematic view showing that two collecting current terminals are installed at each of the opposite sides of the electrode plate; although the ways shown in Fig. 2 and Fig. 3 improve the uniformity of the input/output current density, there is still inconvenient to use with input/output terminals installed at two sides.

The present invention relates to a reserve power supply with electrode plates clipping with auxiliary conductors, whose mainly structural figure is installed with auxiliary conductors, wherein one or more electrode plates, which are installed with at least one collecting current terminal at each of two or more sides thereof, clipping with an auxiliary conductor, which is flat shape, strip, or mesh structure, and is made of the material and/or structure with conductivity better than that of the electrode plates; in which at least one collecting current terminal is installed at each of two or more sides of the auxiliary conductor, for unilateral or multilateral parallel linking with the collecting current terminals installed at two or more sides of the electrode plates, and which are used to be the general collecting current terminals to output current to the external part or to receive the input current from the external part; and there are insulators installed between the auxiliary conductor and the electrode plates to constitute an electrode unit; the number of the above general collecting current terminals for inputting/outputting the collection current is one or more.

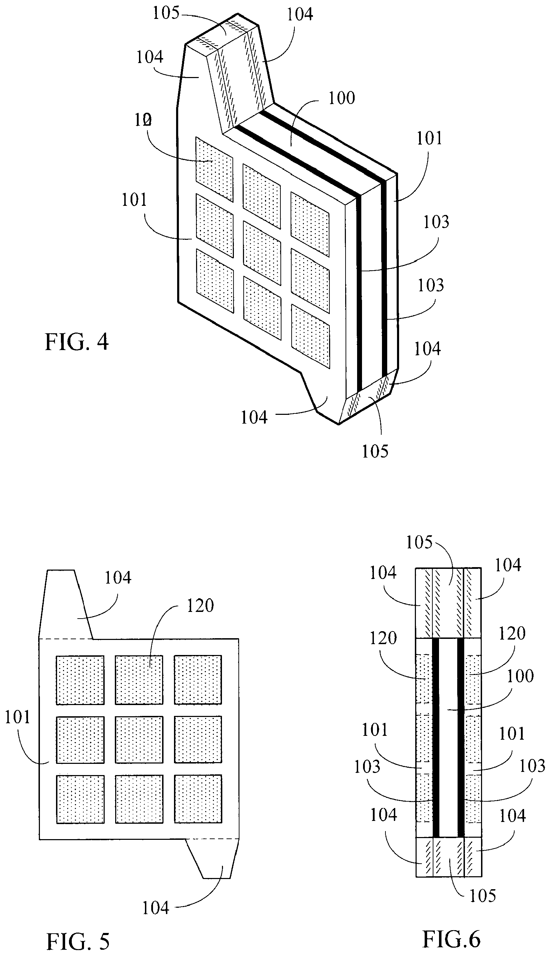

Fig. 4 is a schematic view showing three-dimensional structure of a electrode unit constituted by an auxiliary conductor, in which at least one collecting current terminal is installed at each of at least two sides thereof, clipped by two electrode plates with same polarity, in which at least one collecting current terminal is installed at each of at least two sides thereof, at two laterals of the auxiliary conductor, and an insulator sandwiched therein, respectively, according to the present invention.

Fig. 5 is a front view of Fig. 4.

Fig. 6 is a side view of Fig. 4.

As shown in Fig. 4, Fig. 5, and Fig. 6, the mainly structural figure is installed with an auxiliary conductor 100, wherein one or more side electrode plates 101, which are installed with at least one collecting current terminal 104 at two or more sides thereof, and coated with active substance 120 on the surface of the electrode plate, clipping with the auxiliary conductor 100, which is flat shape, strip, or mesh structure, and is made of the material and/or structure with conductivity better than that of the electrode plates; in which at least one input/output general collecting current terminal 105 is installed at each of two or more sides of the auxiliary conductor 100, for unilateral or multilateral parallel linking with the collecting current terminals installed at two or more sides of the side electrode plates, and which are used to be the general collecting current terminals to output current to the external part or to receive the input current from the external part; and there is an insulator 103 installed between the auxiliary conductor 100 and the side electrode plate 101 to constitute an electrode unit; the number of the general collecting current terminals 105 for inputting/outputting the collection current is one or more.

For the reserve power supply with electrode plates clipping with auxiliary conductors, which is applied to the reserve power supply, such as primary batteries, rechargeable batteries, capacitors, or super capacitors, or to the positive-negative electrode pair required for the fuel cell with electrode plate(s).

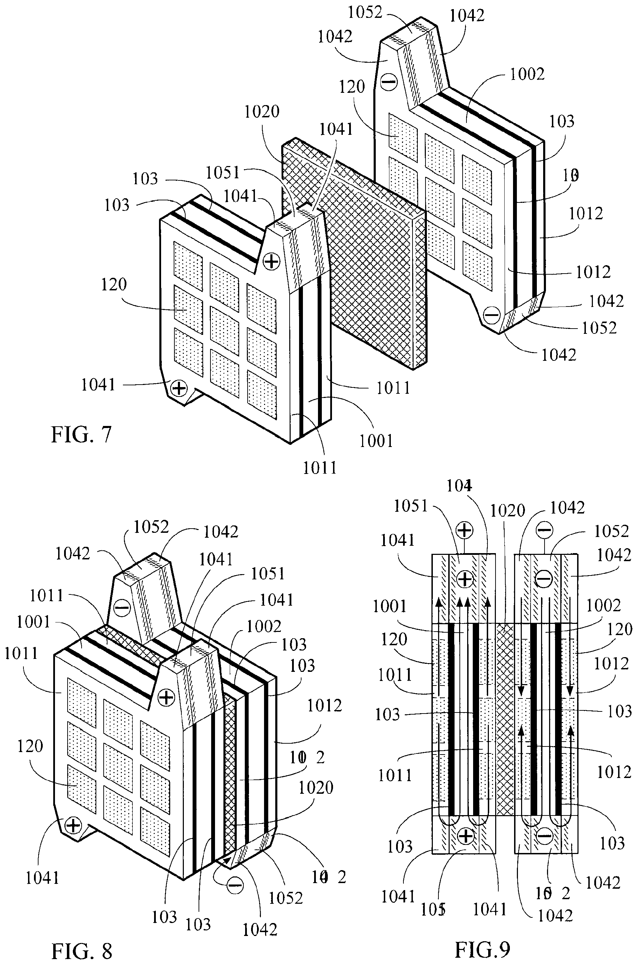

Fig. 7 is a schematic exploded view showing an embodiment, in which an electrode pair of a reserve power supply is constituted by two anode electrode plates (1011) clipping with an anode auxiliary conductor (1001), two cathode electrode plates (1012) clipping with a cathode auxiliary conductor (1002), and an isolated body sandwiched therein.

Fig. 8 is a schematic view showing an embodiment of combination of the electrode pair constituting the reserve power supply shown in Fig. 7.

Fig. 9 is a schematic view showing the reserve power supply constituted by the electrode pair shown in Fig. 8 and the current paths thereof.

As shown in Fig. 7, Fig. 8, and Fig. 9, the mainly structural figure is installed with an anode auxiliary conductor 1001, wherein one or more anode side electrode plates 1011, which are installed with at least one anode collecting current terminal 1041 at two or more sides thereof, and coated with the active substance 120 on the surface of the electrode plate, clipping with the anode auxiliary conductor 1001, which is flat shape, strip, or mesh structure, and is made of the material and/or structure with conductivity better than that of the electrode plates; in which at least one anode input/output general collecting current terminal 1051 is installed at each of two or more sides of the anode auxiliary conductor 1001, for unilateral or multilateral parallel linking with the anode collecting current terminals installed at two or more sides of the anode side electrode plates, and which are used to be the anode general collecting current terminals to output current to the external part or to receive the input current from the external part; and there is the insulator 103 installed between the anode auxiliary conductor 1001 and the anode side electrode plate 1011 to constitute a positive electrode unit; the number of the anode input/output general collecting current terminal 1051 for inputting/outputting the collection current is one or more.

Also, a cathode auxiliary conductor 1002 is installed, wherein one or more cathode side electrode plate 1012, which are installed with at least one cathode collecting current terminal 1042 at two or more sides thereof, and coated with the active substance 120 on the surface of the electrode plate, clipping with the cathode auxiliary conductor 1002, which is flat shape, strip, or mesh structure, and is made of the material and/or structure with conductivity better than that of the electrode plates; in which at least one cathode input/output general collecting current terminal 1052 is installed at each of two or more sides of the cathode auxiliary conductor 1002, for unilateral or multilateral parallel linking with the cathode collecting current terminals installed at two or more sides of the cathode side electrode plates, and which are used to be the cathode general collecting current terminals to output current to the external part or to receive the input current from the external part; and there is the insulator 103 installed between the cathode auxiliary conductor 1002 and the cathode side electrode plate 1012 to constitute a negative electrode unit; the number of the cathode input/output general collecting current terminal 1052 for inputting/outputting the collection current is one or more.

The positive electrode unit integrated with the negative electrode unit is installed in an electrode tank for constituting the electrode pair.

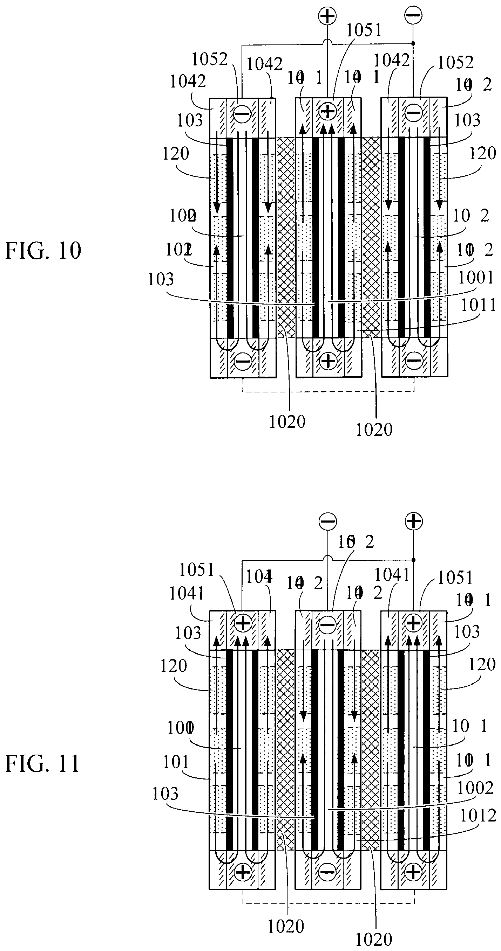

Fig. 10 is a schematic view showing an embodiment of combination of two negative electrode units clipping with a positive electrode unit at two laterals thereof, according to the present invention; in which:
the negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit; and
the positive electrode unit is constituted by two anode side electrode plates 1011 coated with the active substance 120 on the surface of each electrode plate, wherein the insulator 103 is installed between the intermediate section of the electrode plate and the anode auxiliary conductor 1001, and clipping with the anode auxiliary conductor 1001 at two laterals thereof; the anode collecting current terminal 1041 placed at two sides of each of two anode side electrode plates 1011 link with the anode input/output general collecting current terminals 1051 placed at two sides of the anode auxiliary conductor 1001 to constitute the positive electrode unit; the cathode input/output general collecting current terminals 1052 of the two negative electrode units are installed at two sides of the positive electrode unit for unilateral or multilateral parallel connection; and isolated bodies 1020 are installed between the two sides of the positive electrode unit and the two negative electrode units, respectively.

The positive electrode unit integrated with the negative electrode unit is installed in an electrode tank for constituting the electrode pair.

Fig. 11 is a schematic view showing an embodiment of combination of two positive electrode units clipping with a negative electrode unit at two laterals thereof, according to the present invention; in which:
the negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
the positive electrode unit is constituted by two anode side electrode plates 1011 coated with the active substance 120 on the surface of each electrode plate, wherein the insulator 103 is installed between the intermediate section of the electrode plate and the anode auxiliary conductor 1001, and clipping with the anode auxiliary conductor 1001 at two laterals thereof; the anode collecting current terminal 1041 placed at two sides of each of two anode side electrode plates 1011 link with the anode input/output general collecting current terminals 1051 placed at two sides of the anode auxiliary conductor 1001 to constitute the positive electrode unit; and
the anode input/output general collecting current terminals 1051 of the two positive electrode units are installed at two sides of the negative electrode unit for unilateral or multilateral parallel connection; and isolated bodies 1020 are installed between the two sides of the negative electrode unit and the two positive electrode units, respectively.

The positive electrode unit integrated with the negative electrode unit is installed in an electrode tank for constituting the electrode pair.

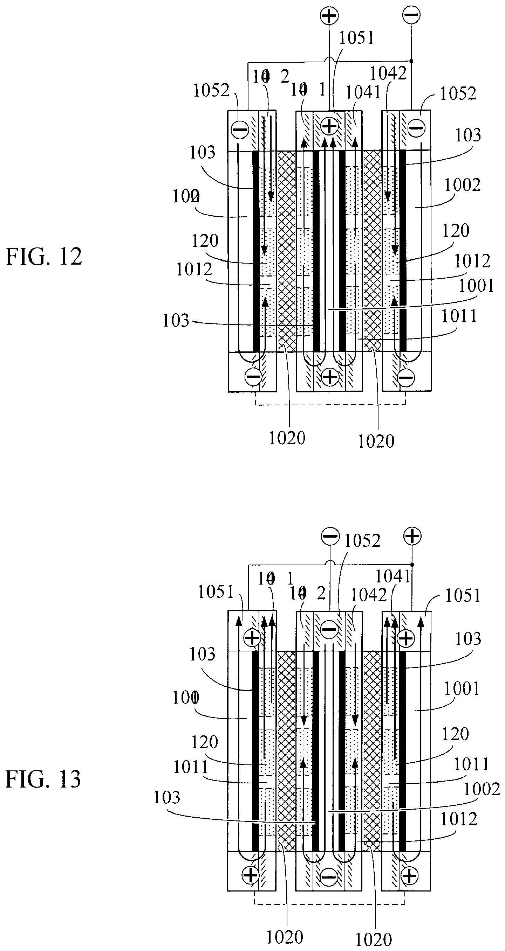

Fig. 12 is a schematic view showing the second embodiment of combination of two negative electrode units clipping with a positive electrode unit at two laterals thereof, according to the present invention; in which:
the negative electrode unit is constituted by the cathode side electrode plate 1012 coated with the active substance 120 on the surface of the electrode plate, wherein the insulator 103 is installed between the intermediate section of the electrode plate and the cathode auxiliary conductor 1002, and clipping with the cathode auxiliary conductor 1002 at the lateral thereof; the cathode collecting current terminals 1042 placed at two sides of the cathode side electrode plate 1012 link with the cathode input/output general collecting current terminals 1052 placed at two sides of the cathode auxiliary conductor 1002 to constitute the negative electrode unit;
the positive electrode unit is constituted by two anode side electrode plates 1011 coated with the active substance 120 on the surface of each electrode plate, wherein the insulator 103 is installed between the intermediate section of the electrode plate and the anode auxiliary conductor 1001, and clipping with the anode auxiliary conductor 1001 at two laterals thereof; the anode collecting current terminal 1041 placed at two sides of each of two anode side electrode plates 1011 link with the anode input/output general collecting current terminals 1051 placed at two sides of the anode auxiliary conductor 1001 to constitute the positive electrode unit; and
the cathode input/output general collecting current terminals 1052 of the two negative electrode units are installed at two sides of the positive electrode unit for unilateral or multilateral parallel connection; and isolated bodies 1020 are installed between the two sides of the positive electrode unit and the two negative electrode units, respectively.

The positive electrode unit integrated with the negative electrode unit is installed in an electrode tank for constituting the electrode pair.

Fig. 13 is a schematic view showing the second embodiment of combination of two positive electrode units clipping with a negative electrode unit at two laterals thereof, according to the present invention; in which:
the negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
the positive electrode unit is constituted by the anode side electrode plate 1011 coated with the active substance 120 on the surface of the electrode plate, wherein the insulator 103 is installed between the intermediate section of the electrode plate and the anode auxiliary conductor 1001, and clipping with the anode auxiliary conductor 1001 at the lateral thereof; the anode collecting current terminal 1041 placed at two sides of the anode side electrode plates 1011 link with the anode input/output general collecting current terminals 1051 placed at two sides of the anode auxiliary conductor 1001 to constitute the positive electrode unit; and
the anode input/output general collecting current terminals 1051 of the two positive electrode units are installed at two sides of the negative electrode unit for unilateral or multilateral parallel connection; and isolated bodies 1020 are installed between the two sides of the negative electrode unit and the two positive electrode units, respectively.

The positive electrode unit integrated with the negative electrode unit is installed in an electrode tank for constituting the electrode pair.

Fig. 14 is a schematic view showing an embodiment of further combination of at least two negative electrode units and at least two positive electrode units staggered placed for unilateral or bilateral parallel connecting the same polarity ones in an electrode tank, in which the anode input/output general collecting current terminal 1051 of the positive electrode unit and the cathode input/output general collecting current terminal 1052 of the negative electrode unit, placed at intermediate portion, are used to be the general collecting current terminals for inputting/outputting current, according to the present invention; in which
the negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
the positive electrode unit is constituted by two anode side electrode plates 1011 coated with the active substance 120 on the surface of each electrode plates, wherein the insulator 103 is installed between the intermediate section of the electrode plate and the anode auxiliary conductor 1001, and clipping with the anode auxiliary conductor 1001 at two laterals thereof; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit; and
at least two negative electrode units and at least two positive electrode units are staggered placed in an electrode tank 1030, in which: the anode input/output general collecting current terminals 1051 of the positive electrode units are used for unilateral or bilateral parallel connecting the same polarity ones, the cathode input/output general collecting current terminals 1052 of the negative electrode units are used for unilateral or bilateral parallel connecting the same polarity ones, and the anode input/output general collecting current terminal 1051 of the positive electrode unit and the cathode input/output general collecting current terminal 1052 of the negative electrode unit, placed at intermediate portion, are used to be the general collecting current terminals for the anodes and cathodes inputting/outputting current.

Fig. 15 is a schematic view showing the second embodiment of combination of electrode units with same polarity for unilateral or bilateral parallel connection in an electrode tank, in which the anode input/output general collecting current terminal 1051 of the positive electrode unit and the cathode input/output general collecting current terminal 1052 of the negative electrode unit, placed at two laterals, are used to be the general collecting current terminals for inputting/outputting current, according to the present invention; in which: at least two negative electrode units and at least two positive electrode units are staggered placed;
the negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
the positive electrode unit is constituted by two anode side electrode plates 1011 coated with the active substance 120 on the surface of each electrode plates, wherein the insulator 103 is installed between the intermediate section of the electrode plate and the anode auxiliary conductor 1001, and clipping with the anode auxiliary conductor 1001 at two laterals thereof; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit; and
at least two negative electrode units and at least two positive electrode units are staggered placed in the electrode tank 1030, in which: the anode input/output general collecting current terminals 1051 of the positive electrode units are used for unilateral or bilateral parallel connecting the same polarity ones, the cathode input/output general collecting current terminals 1052 of the negative electrode units are used for unilateral or bilateral parallel connecting the same polarity ones, and the anode input/output general collecting current terminal 1051 of the positive electrode unit and the cathode input/output general collecting current terminal 1052 of the negative electrode unit, placed at two laterals, are used to be the general collecting current terminals for the anodes and cathodes inputting/outputting current.

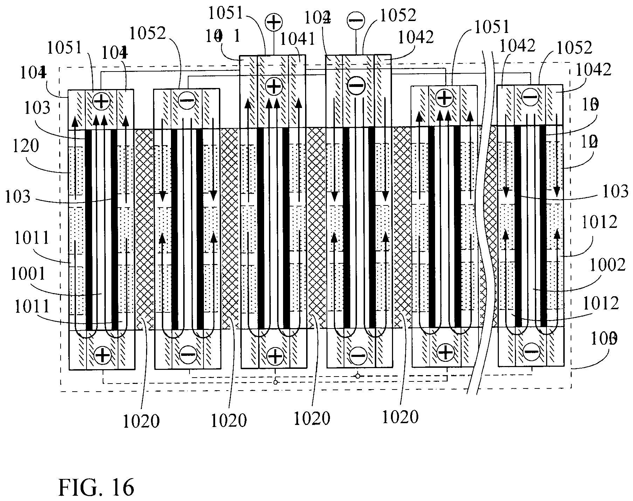

Fig. 16 is a schematic view showing the third embodiment of combination of at least two negative electrode units and at least two positive electrode units staggered placed, in which the anode input/output general collecting current terminal 1051 of the positive electrode unit and the cathode input/output general collecting current terminal 1052 of the negative electrode unit, placed at intermediate portion, are used to be the general collecting current terminals for inputting/outputting current, according to the present invention; in which:
the negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
the positive electrode unit is constituted by two anode side electrode plates 1011 coated with the active substance 120 on the surface of each electrode plates, wherein the insulator 103 is installed between the intermediate section of the electrode plate and the anode auxiliary conductor 1001, and clipping with the anode auxiliary conductor 1001 at two laterals thereof; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit; and
at least two negative electrode units and at least two positive electrode units are staggered placed in the electrode tank 1030, in which: the anode input/output general collecting current terminals 1051 of the positive electrode units are used for unilateral or bilateral parallel connecting the same polarity ones, the cathode input/output general collecting current terminals 1052 of the negative electrode units are used for unilateral or bilateral parallel connecting the same polarity ones, and the anode input/output general collecting current terminal 1051 of the positive electrode unit and the cathode input/output general collecting current terminal 1052 of the negative electrode unit, placed at intermediate portion, are used to be the general collecting current terminals for the anodes and cathodes inputting/outputting current.

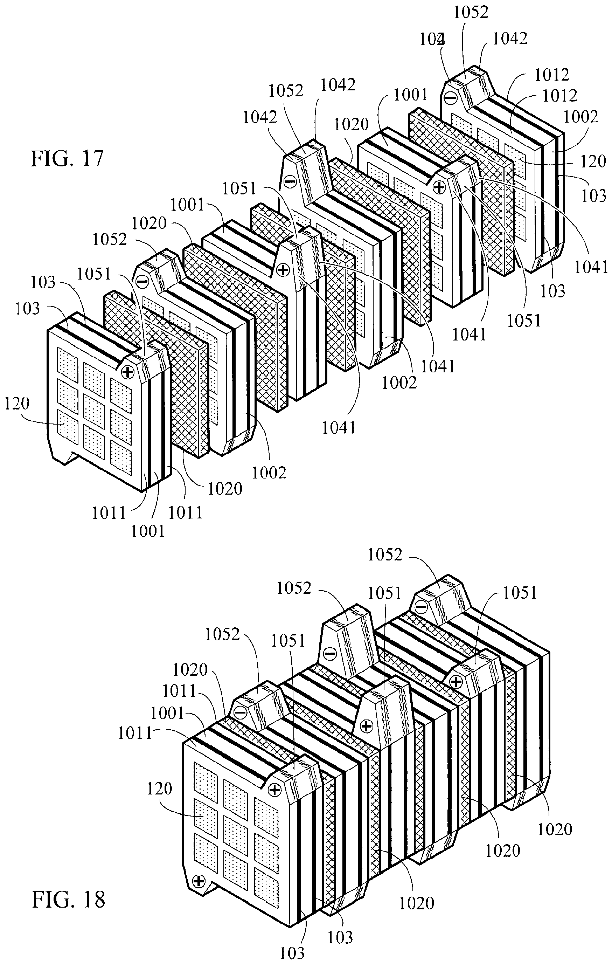

Fig. 17 is a three-dimensional schematic view showing the exploded structure of Fig. 16.

Fig. 18 is a three-dimensional schematic view showing the composition of Fig. 16.

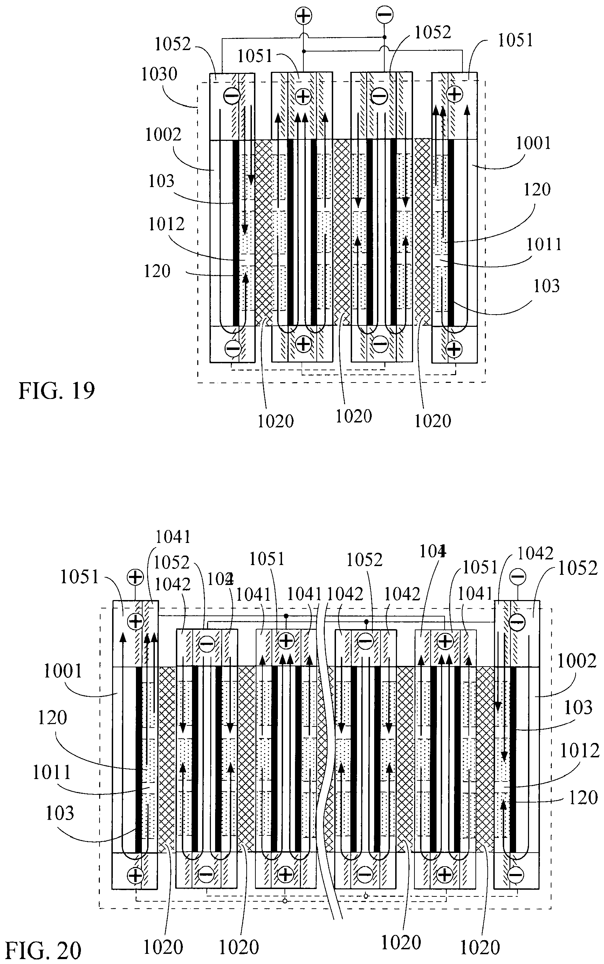

Another structural mode of the present invention is shown as Fig. 19, which is a schematic view showing an embodiment of combination of electrode pairs constituted by positive and negative electrodes for staggered parallel superposition, in which the positive-negative electrode pair with input/output general collecting current terminals is clipped therein, according to the present invention; in which, the positive electrode unit placed at lateral is constituted by the auxiliary conductor 1001 placed at lateral clipping with the anode side electrode plate 1011 coated with the active substance 120 on the surface of the electrode plate, wherein the insulator 103 is installed between the intermediate section of the auxiliary conductor and the anode side electrode plate 1011; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit;
the negative electrode unit placed at another lateral is constituted by the cathode auxiliary conductor 1002 placed at lateral clipping with the cathode side electrode plate 1012 coated with the active substance 120 on the surface of the electrode plate, wherein the insulator 103 is installed between the intermediate section of the auxiliary conductor and the cathode side electrode plate 1012; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
two cathode side electrode plates 1012 are coated with the active substance 120 on each electrode plate, wherein the insulator 103 is installed between the intermediate section of the electrode plate and the cathode auxiliary conductor 1002, and clip with the cathode auxiliary conductor 1002 at two laterals thereof, and the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
two anode side electrode plates 1011 are coated with the active substance 120 on each electrode plate, wherein the insulator 103 is installed between the intermediate section of the electrode plate and the anode auxiliary conductor 1001, and clip with the anode auxiliary conductor 1001 at two laterals thereof, and the anode collecting current terminals 1041 placed at two sides of each of two anode side electrode plate1 1011 link with the anode input/output general collecting current terminals 1051 placed at two sides of the anode auxiliary conductor 1001 to constitute the positive electrode unit; and
the above negative electrode units and positive electrode units are staggered placement for constituting the electrode pairs, the negative electrode unit and the positive electrode unit, placed at two laterals, are placed in the electrode tank 1030, and the isolated body 1020 is installed between the positive and negative electrode units, which are staggered placement, in which: the anode input/output general collecting current terminal 1051 of each positive electrode unit is unilateral or multilateral connected with same polarity, the cathode input/output general collecting current terminal 1052 of each negative electrode unit is unilateral or multilateral connected with same polarity, and the anode input/output general collecting current terminal 1051 of the positive electrode unit and the cathode input/output general collecting current terminal 1052 of the negative electrode unit, placed at intermediate portion, are used to be the general collecting current terminals for inputting/outputting current.

Another structural mode of the present invention is shown as Fig. 20, which is a schematic view showing the second embodiment of combination of negative electrode units and positive electrode units for staggered placement, in which the anode input/output general collecting current terminal 1051 of the positive electrode unit and the cathode input/output general collecting current terminal 1052 of the negative electrode unit, placed at two laterals, are used to be the general collecting current terminals for inputting/outputting current; in which, the positive electrode unit placed at lateral is constituted by the auxiliary conductor 1001 placed at lateral clipping with the anode side electrode plate 1011 coated with the active substance 120 on the surface of the electrode plate, wherein the insulator 103 is installed between the intermediate section of the auxiliary conductor and the anode side electrode plate 1011; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit;
the negative electrode unit placed at another lateral is constituted by the cathode auxiliary conductor 1002 placed at lateral clipping with the cathode side electrode plate 1012 coated with the active substance 120 on the surface of the electrode plate, wherein the insulator 103 is installed between the intermediate section of the auxiliary conductor and the cathode side electrode plate 1012; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
two cathode side electrode plates 1012 are coated with the active substance 120 on each electrode plate, wherein the insulator 103 is installed between the intermediate section of the electrode plate and the cathode auxiliary conductor 1002, and clip with the cathode auxiliary conductor 1002 at two laterals thereof, and the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
two anode side electrode plates 1011 are coated with the active substance 120 on each electrode plate, wherein the insulator 103 is installed between the intermediate section of the electrode plate and the anode auxiliary conductor 1001, and clip with the anode auxiliary conductor 1001 at two laterals thereof, and the anode collecting current terminals 1041 placed at two sides of each of two anode side electrode plate 1 1011 link with the anode input/output general collecting current terminals 1051 placed at two sides of the anode auxiliary conductor 1001 to constitute the positive electrode unit; and
the above negative electrode units and positive electrode units are staggered placement for constituting the electrode pairs, the negative electrode unit and the positive electrode unit, placed at two laterals, are placed in the electrode tank 1030, and the isolated body 1020 is installed between the positive and negative electrode units, which are staggered placement, in which: the anode input/output general collecting current terminals 1051 placed at two sides of each positive electrode unit coated with the active substance 120 on the electrode plate are unilateral or multilateral connected with same polarity, the cathode input/output general collecting current terminals 1052 placed at two sides of each negative electrode unit are unilateral or multilateral connected with same polarity, and the anode input/output general collecting current terminal 1051 of the positive electrode unit and the cathode input/output general collecting current terminal 1052 of the negative electrode unit, placed at two laterals, are used to be the general collecting current terminals for the anodes and cathodes inputting/outputting current.

Another structural mode of the present invention is shown as Fig. 21, which is a schematic view showing the third embodiment of combination of negative electrode units and positive electrode units for staggered placement, in which the anode input/output general collecting current terminal 1051 of the positive electrode unit and the cathode input/output general collecting current terminal 1052 of the negative electrode unit, placed at intermediate portion, are used to be the general collecting current terminals for inputting/outputting current; in which, the positive electrode unit placed at lateral is constituted by the auxiliary conductor 1001 placed at lateral clipping with the anode side electrode plate 1011 coated with the active substance 120 on the surface of the electrode plate, wherein the insulator 103 is installed between the intermediate section of the auxiliary conductor and the anode side electrode plate 1011; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit;
the negative electrode unit placed at another lateral is constituted by the cathode auxiliary conductor 1002 placed at lateral clipping with the cathode side electrode plate 1012 coated with the active substance 120 on the surface of the electrode plate, wherein the insulator 103 is installed between the intermediate section of the auxiliary conductor and the cathode side electrode plate 1012; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
two cathode side electrode plates 1012 are coated with the active substance 120 on each electrode plate, wherein the insulator 103 is installed between the intermediate section of the electrode plate and the cathode auxiliary conductor 1002, and clip with the cathode auxiliary conductor 1002 at two laterals thereof, and the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
two anode side electrode plates 1011 are coated with the active substance 120 on each electrode plate, wherein the insulator 103 is installed between the intermediate section of the electrode plate and the anode auxiliary conductor 1001, and clip with the anode auxiliary conductor 1001 at two laterals thereof, and the anode collecting current terminals 1041 placed at two sides of each of two anode side electrode plate1 1011 link with the anode input/output general collecting current terminals 1051 placed at two sides of the anode auxiliary conductor 1001 to constitute the positive electrode unit; and
the above negative electrode units and positive electrode units are staggered placement for constituting the electrode pairs, the negative electrode unit and the positive electrode unit, placed at two laterals, are placed in the electrode tank 1030, and the isolated body 1020 is installed between the positive and negative electrode units, which are staggered placement, in which: the anode input/output general collecting current terminal 1051 of each positive electrode unit coated with the active substance 120 on the electrode plate is unilateral or multilateral connected with same polarity, the cathode input/output general collecting current terminal 1052 of each negative electrode unit is unilateral or multilateral connected with same polarity, and the anode input/output general collecting current terminal 1051 of the positive electrode unit and the cathode input/output general collecting current terminal 1052 of the negative electrode unit, placed at intermediate portion, are used to be the general collecting current terminals for the anodes and cathodes inputting/outputting current.

The present invention is further shown as Fig. 22, which is a schematic view showing the combination of the electrode pair constituted by at least one positive electrode unit and at least one negative electrode unit, in which the polarities of two laterals, the monolithic positive polarity electrode plate, and the monolithic negative polarity electrode plate are staggered superposition, and the anode input/output general collecting current terminal 1051 of the positive electrode unit and the cathode input/output general collecting current terminal 1052 of the negative electrode unit, placed at intermediate portion, are used to be the general collecting current terminals for inputting/outputting current; in which:
at least one negative electrode unit is constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
at least one positive electrode unit is constituted by two anode side electrode plates 1011 coated with the active substance 120 on the surface of each electrode plates, wherein the insulator 103 is installed between the intermediate section of the electrode plate and the anode auxiliary conductor 1001, and clipping with the anode auxiliary conductor 1001 at two laterals thereof; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit; and
the negative electrode unit and the positive electrode unit are respectively staggered with one or more monolithic electrode plate units and placed in the electrode tank 1030, in which, the monolithic anode electrode plate 1031 and the monolithic cathode electrode plate 1032 are coated with the active substance 120 on the electrode plates, and are staggered placed at two laterals of the positive electrode unit and the negative electrode unit by polarity; the isolated bodies 1020 are installed between the positive electrode unit, the negative electrode unit, the monolithic anode electrode plate 1031, and the monolithic cathode electrode plate 1032, respectively; the anode input/output general collecting current terminals 1051 of the positive electrode units, and the collecting current terminals 601 of the monolithic anode electrode plate 1031 are used for unilateral or multilateral parallel connecting the same polarity ones; the cathode input/output general collecting current terminals 1052 of the negative electrode units, and the collecting current terminal 602 of the monolithic cathode electrode plate 1032 are used for unilateral or multilateral parallel connecting the same polarity ones; and the anode input/output general collecting current terminal 1051 of the positive electrode unit and the cathode input/output general collecting current terminal 1052 of the negative electrode unit, placed at intermediate portion, are used to be the general collecting current terminals for the anodes and cathodes inputting/outputting current.

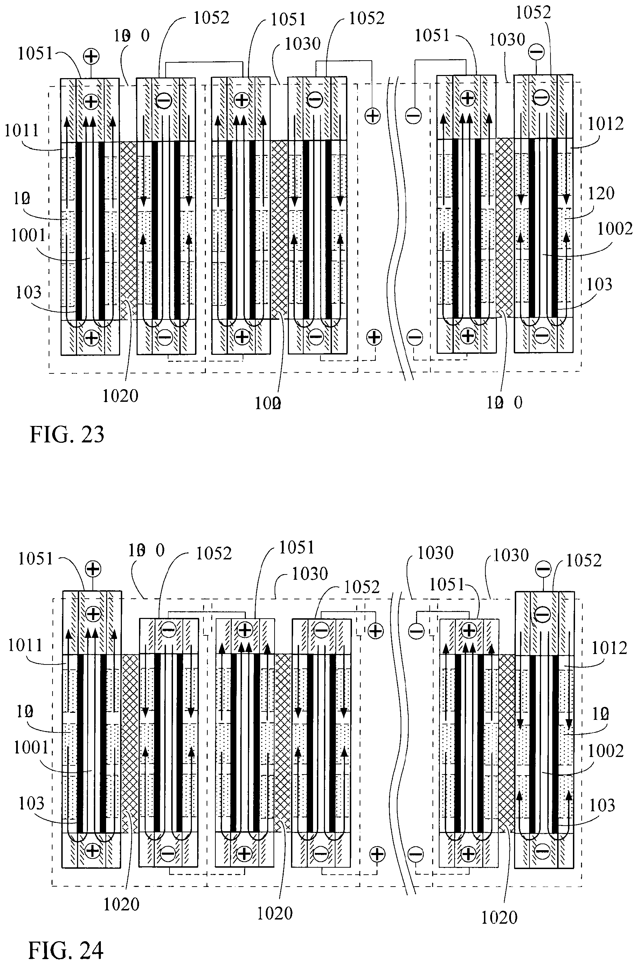

The present invention is further shown as Fig. 23, which is a schematic view showing an embodiment of combination, in which a number of electrode pairs constituted by positive-negative electrode units placed in individual electrode tank 1030 are unilateral or multilateral connected in series by different polarity; in which:
at least two negative electrode units are constituted by two cathode side electrode plates 1012 coated with the active substance 120 on the surface of each electrode plate, wherein the insulator 103 is installed between the intermediate section of the electrode plate and the cathode auxiliary conductor 1002, and clipping with the cathode auxiliary conductor 1002; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
at least two positive electrode units are constituted by two anode side electrode plates 1011 coated with the active substance 120 on the surface of each electrode plates, wherein the insulator 103 is installed between the intermediate section of the electrode plate and the anode auxiliary conductor 1001, and clipping with the anode auxiliary conductor 1001; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit; and
at least one or more negative electrode units and at least one or more positive electrode units are staggered placed for constituting the electrode pairs, and the isolated bodies 1020 are installed between each electrode unit for being placed in the same electrode tank 1030; if there are more than one electrode units with same polarity placed in the same electrode tank 1030, the collecting current terminals of the electrode units with same polarity are mutually unilateral or multilateral parallel connected; in which, the anode input/output general collecting current terminal 1051 of the positive electrode unit and the cathode input/output general collecting current terminal 1052 of the negative electrode unit, which constitute the electrode pair in each electrode tank 1030, are exposed to the outside of the tank shell of the electrode tank 1030, for unilateral or multilateral connection in series with the electrode pair in different electrode tank 1030 by different polarity; in different electrode tanks 1030, the anode input/output general collecting current terminal 1051 of the positive electrode unit and the cathode input/output general collecting current terminal 1052 of the negative electrode unit in the electrode pair after connected in series are used to be the anode and cathode general collecting current terminals for inputting/outputting current after the connected in series.

Fig. 24 is a schematic view showing the second embodiment of combination shown in Fig. 23, in which except for the anode input/output general collecting current terminal and the cathode input/output general collecting current terminal, which are used to input/output current, are exposed to the outside of the tank shell of the electrode tank 1030, the other collecting current terminals are hidden within the electrode tank 1030.

As shown in Fig. 24, except for the anode input/output general collecting current terminal and the cathode input/output general collecting current terminal, which are used to input/output current, are exposed to the outside of the tank shell of the electrode tank 1030, the other collecting current terminals are hidden within the electrode tank 1030, and the other compositions are same as that of Fig. 23.

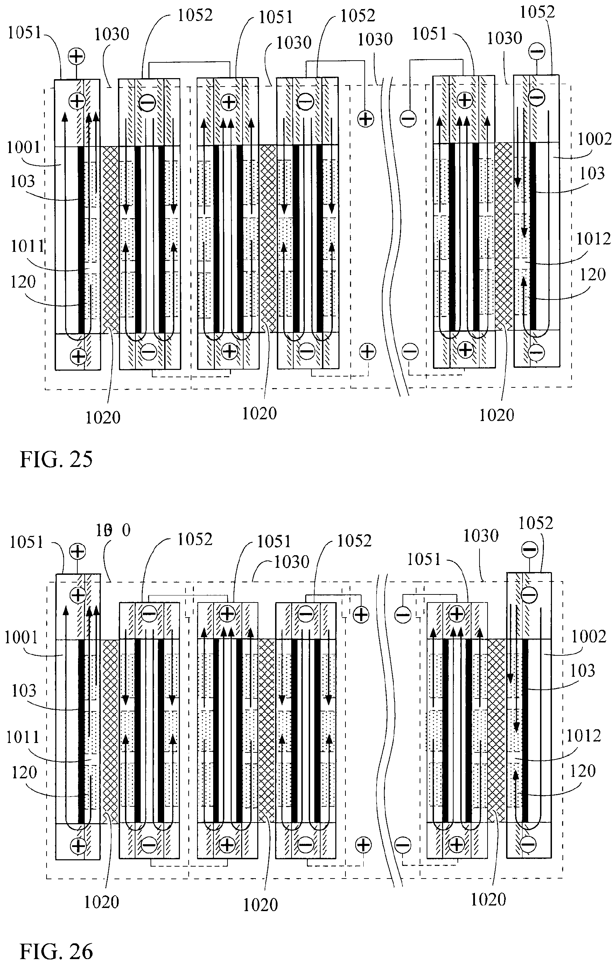

Fig. 25 is a schematic view showing an embodiment of combination, in which a number of electrode pairs constituted by positive-negative electrode units placed at individual electrode tank 1030 are unilateral or multilateral connected in series by different polarity.

As shown in Fig. 25, the positive electrode unit in the electrode tank 1030 for inputting/outing the anode current after connected in series is constituted by the anode auxiliary conductor 1001 placed at the lateral, in which the insulator 103 is installed between the intermediate section of the auxiliary conductor and the anode side electrode plate 1011, and clipping with the anode side electrode plate 1011; the anode collecting current terminals 1041 placed at two sides of the anode side electrode plate 1011 link with the anode input/output general collecting current terminals 1051 placed at two sides of the anode auxiliary conductor 1001 to constitute the positive electrode unit placed at lateral;
two cathode side electrode plates 1012 coated with the active substance 120 on the surface of each electrode plate, in which the insulator 103 is installed between the intermediate section of the electrode plate and the cathode auxiliary conductor 1002, clip with the cathode auxiliary conductor 1002 at two laterals thereof; the cathode collecting current terminals 1042 placed at two sides of each of two cathode side electrode plates 1012 link with the cathode input/output general collecting current terminals 1052 placed at two sides of the cathode auxiliary conductor 1002 to constitute the negative electrode unit;
if there are more than one electrode units with same polarity placed in the electrode tank 1030, the collecting current terminals of the electrode units with same polarity are mutually unilateral or multilateral parallel connected;
also, the negative electrode unit in another electrode tank 1030 for inputting/outing the cathode current after connected in series is constituted by the cathode auxiliary conductor 1002 placed at the lateral, in which the insulator 103 is installed between the intermediate section of the auxiliary conductor and the cathode side electrode plate 1012, and clipping with the cathode side electrode plate 1012 coated with the active substance 120 on the surface of the electrode plate; the cathode collecting current terminal 1042 placed at two sides of the cathode side electrode plate 1012 link with the cathode input/output general collecting current terminals 1052 placed at two sides of the cathode auxiliary conductor 1002 to constitute the negative electrode unit placed at lateral;
two anode side electrode plates 1011 coated with the active substance 120 on the surface of each electrode plate, in which the insulator 103 is installed between the intermediate section of the electrode plate and the anode auxiliary conductor 1001, clip with the anode auxiliary conductor 1001 at two laterals thereof; the anode collecting current terminals 1041 placed at two sides of each of two anode side electrode plates 1011 link with the anode input/output general collecting current terminals 1051 placed at two sides of the anode auxiliary conductor 1001 to constitute the positive electrode unit;
if there are more than one electrode units with same polarity placed in the electrode tank 1030, the collecting current terminals of the electrode units with same polarity are mutually unilateral or multilateral parallel connected;
at least one or more negative electrode units and at least one or more positive electrode units are staggered placed for constituting the electrode pairs placed in the individual electrode tank 1030 connected in series, and the isolated bodies 1020 are installed between each electrode unit for being placed in the same electrode tank 1030; if there are more than one electrode units with same polarity placed in the same electrode tank 1030, the collecting current terminals of the electrode units with same polarity are mutually unilateral or multilateral parallel connected; in which:
the anode input/output general collecting current terminal 1051 of the positive electrode unit and the cathode input/output general collecting current terminal 1052 of the negative electrode unit, which constitute the electrode pair in each electrode tank 1030 connected in series, are unilateral or multilateral connected in series with the electrode pair in different electrode tank 1030 by different polarity; in different electrode tanks, the anode input/output general collecting current terminal 1051 of the positive electrode unit and the cathode input/output general collecting current terminal 1052 of the negative electrode unit in the electrode pair 1030 after the connected in series are used to be the anode and cathode general collecting current terminals for inputting/outputting current after the connected in series.

Fig. 26 is a schematic view showing the second embodiment of combination shown in Fig. 25, in which except for the current terminals, which are used to input/output current, are exposed to the outside of the tank shell, the other collecting current terminals are hidden within the electrode tank 1030.

As shown in Fig. 26, except for the anode input/output general collecting current terminal and the cathode input/output general collecting current terminal for inputting/outputting current, are exposed to the outside of the tank shell, the other collecting current terminals are hidden within the electrode tank 1030, and the other compositions are same as that of Fig. 25.

For the reserve power supply with electrode plates clipping with auxiliary conductors, in practical application, two or more sides of the auxiliary conductor are individually placed with one or more collecting current terminals, and unilaterally or bilaterally clip with the electrode plate with same polarity, which is installed with one or more collecting current terminals at two or more sides; the one or more collecting current terminals placed at each of the two or more sides of the both are unilaterally or multilaterally parallel connected, and the insulators are installed between the both for constituting the electrode unit with a variety of geometric shapes; hereby give the following cases described below:

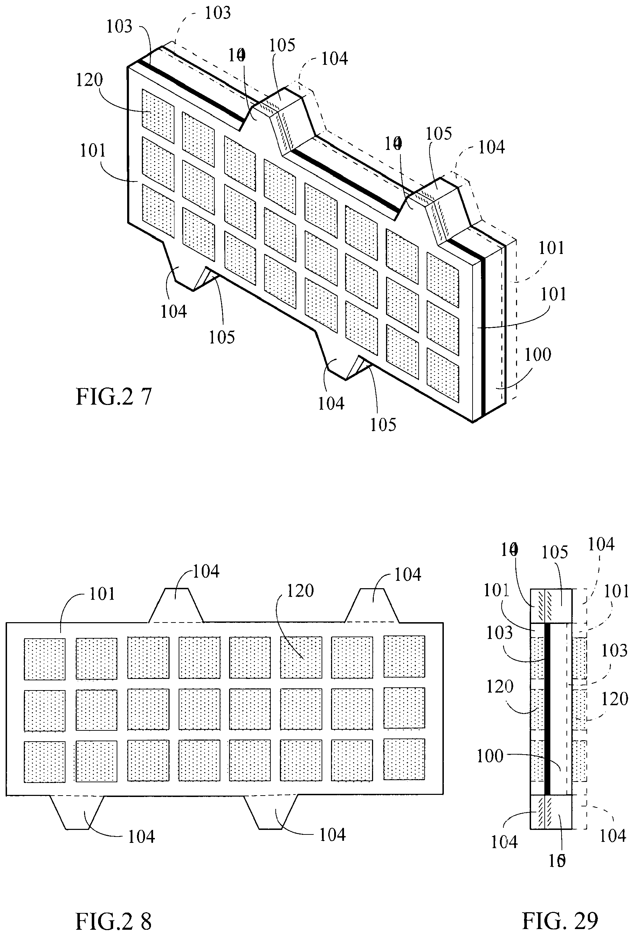

Fig. 27 is a three-dimensional structural schematic view showing the electrode unit constituted by the auxiliary conductor, in which two input/output collecting current terminals are installed at each of two sides thereof, clipped by the electrode plate(s) with same polarity, in which two collecting current terminals are installed at each of two sides thereof, at one of two or two outer sides of the auxiliary conductor, and an insulator sandwiched therein, respectively, according to the present invention.

Fig. 28 is a front view of Fig. 27.

Fig. 29 is a side view of Fig. 27.

As shown in Figs. 27, 28, and 29, the electrode unit constituted by the auxiliary conductor, in which two input/output collecting current terminals are installed at each of two sides thereof, clipped by the electrode plate(s) with same polarity, in which two collecting current terminals are installed at each of two sides thereof, at one of two or two outer sides of the auxiliary conductor, and an insulator sandwiched therein, respectively, according to the present invention.

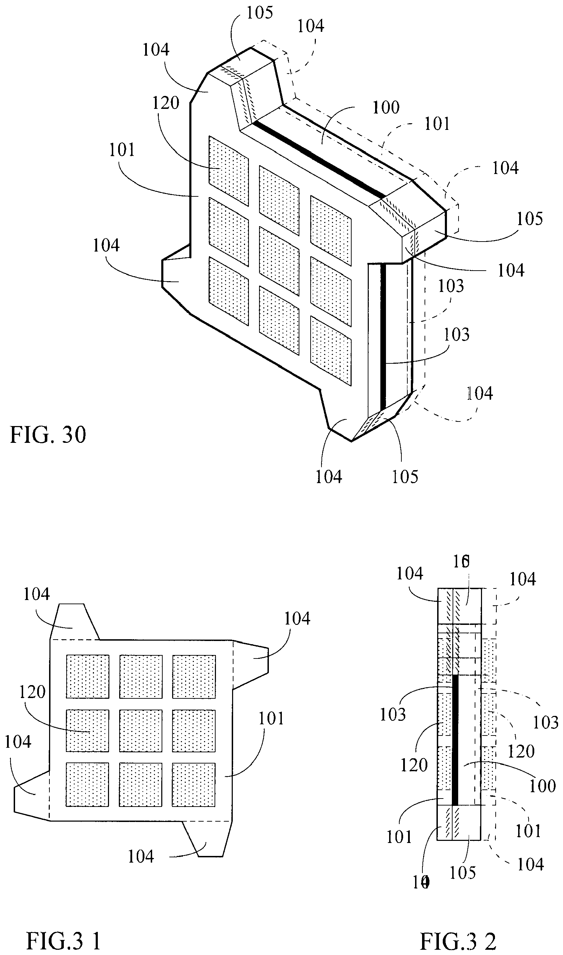

Fig. 30 is a three-dimensional structural schematic view showing the electrode unit constituted by the auxiliary conductor, in which a collecting current terminal is installed at each of four sides thereof, clipped by the electrode plate(s) with same polarity, in which a collecting current terminal is installed at each of four sides thereof, at one of two or two outer sides of the auxiliary conductor, and an insulator sandwiched therein, respectively, according to the present invention.

Fig. 31 is a front view of Fig. 30.

Fig. 32 is a side view of Fig. 30.

As shown in Figs. 30, 31, and 32, the electrode unit constituted by the auxiliary conductor, in which a collecting current terminal is installed at each of four sides thereof, clipped by the electrode plate(s) with same polarity, in which a collecting current terminal is installed at each of four sides thereof, at one of two or two outer sides of the auxiliary conductor, and an insulator sandwiched therein, respectively.

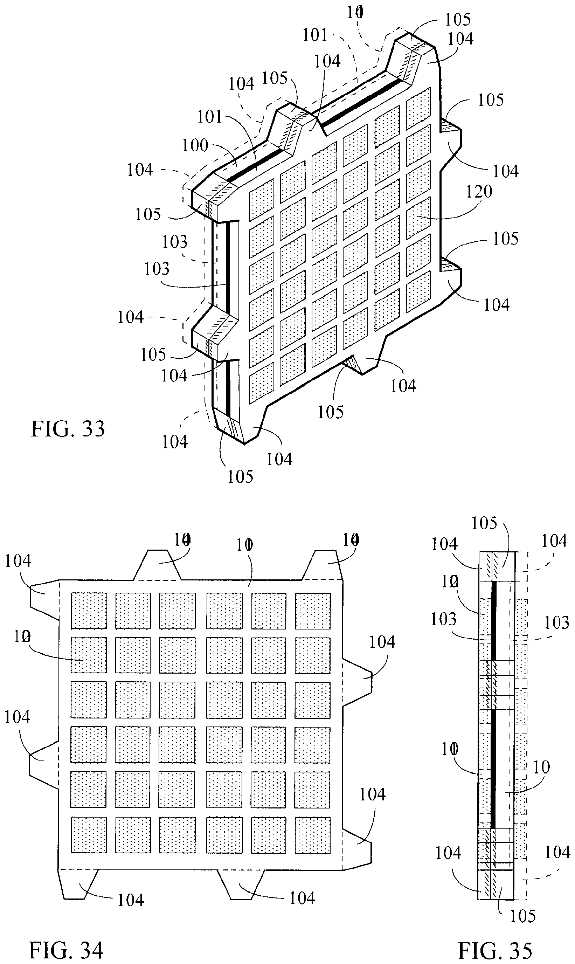

Fig. 33 is a three-dimensional structural schematic view showing the electrode unit constituted by the auxiliary conductor, in which two collecting current terminals are installed at each of four sides thereof, clipped by the electrode plate(s) with same polarity, in which two collecting current terminals are installed at each of four sides thereof, at one of two or two outer sides of the auxiliary conductor, and an insulator sandwiched therein, respectively, according to the present invention.

Fig. 34 is a front view of Fig. 33.

Fig. 35 is a side view of Fig. 33.

As shown in Figs. 33, 34, and 35, the electrode unit constituted by the auxiliary conductor, in which two collecting current terminals are installed at each of four sides thereof, clipped by the electrode plate(s) with same polarity, in which two collecting current terminals are installed at each of four sides thereof, at one of two or two outer sides of the auxiliary conductor, and an insulator sandwiched therein, respectively.

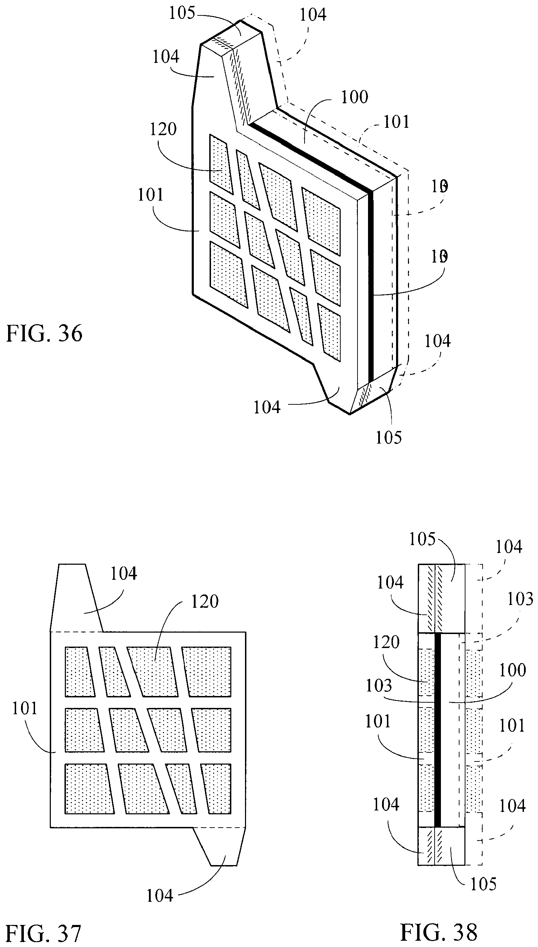

Fig. 36 is a schematic structural view showing an embodiment of application, in which the conductor is radial and the electrode unit is grid layout, according to the present invention.

Fig. 37 is a front view of Fig. 36.

Fig. 38 is a side view of Fig. 36.

As shown in Figs. 36, 37, and 38, the structure of the reserve power supply with electrode plates clipping with auxiliary conductors is constituted by a radial conductor and a grid layout electrode unit.

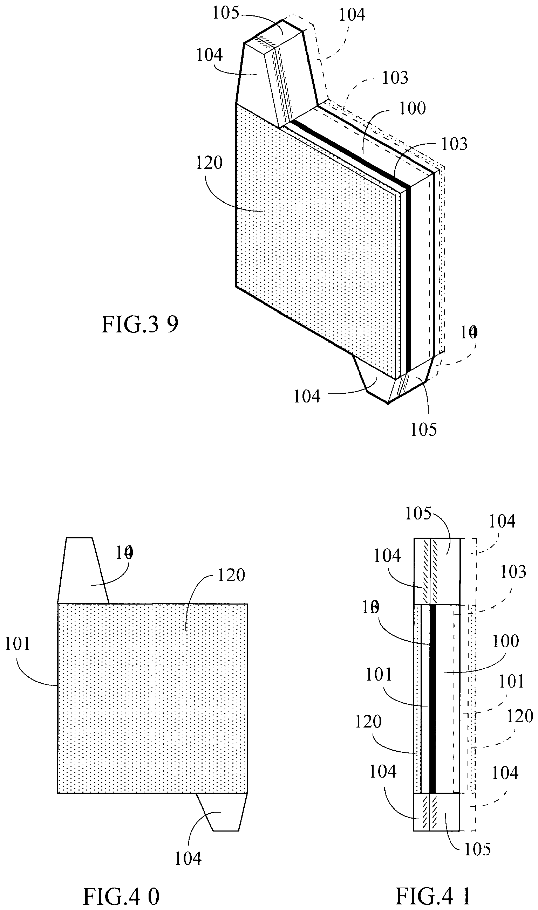

Fig. 39 is a schematic structural view showing an embodiment of application, in which the electrode unit is plate type, according to the present invention.

Fig. 40 is a front view of Fig. 39.

Fig. 41 is a side view of Fig. 39.

As shown in Figs. 39, 40, and 41, the structure of the reserve power supply with electrode plates clipping with auxiliary conductors is constituted by a plate type electrode unit.

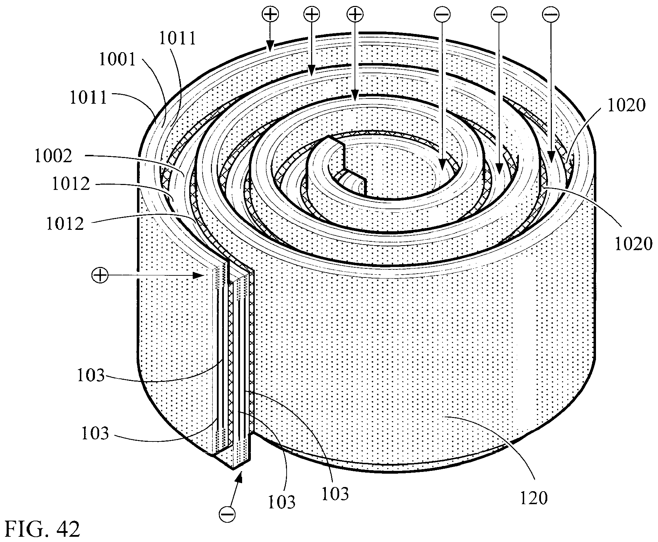

Fig. 42 is a schematic view showing an embodiment of application, in which the electrode unit is used to be a winding type reserve power supply, according to the present invention.

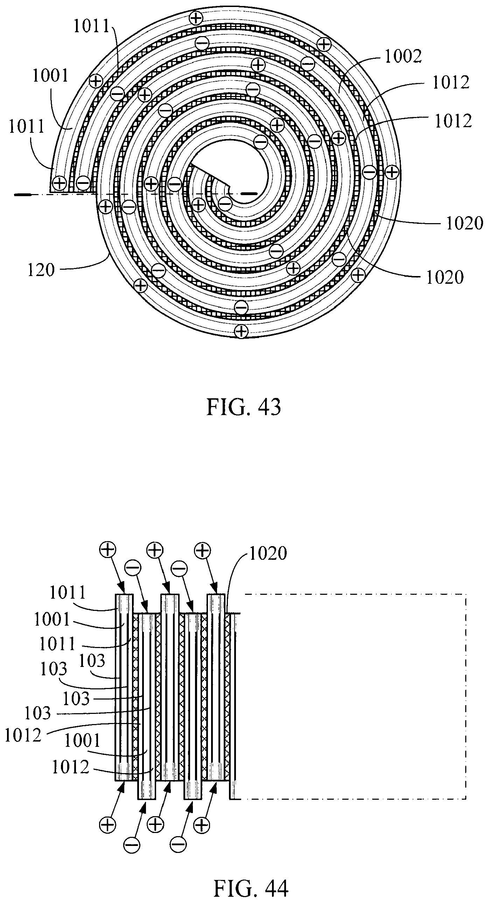

Fig. 43 is a top view of Fig. 42.

Fig. 44 is a side view of Fig. 42.

As shown in Figs. 42, 43, and 44, the structure of the reserve power supply with electrode plates clipping with auxiliary conductors is constituted by an electrode unit, which is a winding type reserve power supply.

## Claims

1. A reserve power supply comprising:
a pair of electrode plates (101, 1011, 1012), each plate (101, 1011, 1012) including collecting current terminals (104, 1041, 1042) at two or more sides thereof;
an auxiliary conductor (100, 1001, 1002) disposed between the pair of electrode plates (101, 1011, 1012), and including collecting current terminals (105, 1051, 1052) at two or more sides thereof; and
an insulator (103) disposed between the auxiliary conductor (100, 1001, 1002) and the electrode plates (101, 1011, 1012);
wherein corresponding collecting current terminals (104, 1041, 1042) of the plates (101, 1011, 1012) and collecting current terminals (105, 1051, 1052) of the auxiliary conductor (100, 1001, 1002) are connected together.

2. The reserve power supply of claim 1, wherein the auxiliary conductor (100, 1001, 1002) is a flat shape, strip or mesh structure, and has a conductivity greater than that of the electrode plates, and wherein the electrode plates have an active substance 120 coated on the surface.

3. The reserve power supply of claim 1 or claim 2, in which a pair of electrode plates (1011) forms a positive electrode unit comprising anode electrode plates (1011) and another pair of electrode plates (1012) form a negative electrode unit comprising cathode electrode plates (1012), and wherein the positive electrode unit is separated from the negative electrode unit by an isolating body (1020) sandwiched therebetween.

4. The reserve power supply of claim 3, comprising a positive electrode unit between two negative electrode units, with isolating bodies installed between the two sides of the positive electrode unit and the two negative electrode units.

5. The reserve power supply of claim 3 or claim 4, comprising a negative electrode unit between two positive electrode units, with isolating bodies (1020) installed between the two sides of the negative electrode unit and the two positive electrode units.

6. The reserve power supply of claim 4, wherein the pair of electrode plates are anode electrode plates (1011), the reserve power supply further comprising two negative electrode units, each comprising a cathode electrode plate (1012) having cathode collecting current terminals (1042) at two sides, an auxiliary conductor (1002) having cathode collecting current terminals (1052) connected to the cathode collecting current terminals (1042), and an insulator installed between the cathode electrode plate and the auxiliary conductor (1002); wherein the negative electrode units are installed at either side of the anode electrode plates (1011) with isolating bodies (1020) installed between the anode electrode plates (1011) and the negative electrode units.

7. The reserve power supply of claim 5, wherein the pair of electrode plates are cathode electrode plates (1012), the reserve power supply further comprising two positive electrode units, each comprising an anode electrode plate (1011) having anode collecting current terminals (1041) at two sides, an auxiliary conductor (1001) having anode collecting current terminals (1051) connected to the anode collecting current terminals (1041), and an insulator installed between the anode electrode plate and the auxiliary conductor (1001); wherein the positive electrode units are installed at either side of the cathode electrode plates (1012) with isolating bodies (1020) installed between the cathode electrode plates (1012) and the positive electrode units.

8. A reserve power supply, comprising at least two each of the positive electrode units and negative electrode units of claim 3 in an electrode tank (1030), wherein the positive electrode units and negative units are staggered throughout the unit, each separated by an isolating body 1020, and wherein the anode collecting current terminal 1051 of the positive electrode unit and the cathode collecting current terminal 1052 of the negative electrode unit, placed at intermediate portion, are used to be the collecting current terminals for inputting/outputting current.

9. A reserve power supply, comprising at least two each of the positive electrode units and negative electrode units of claim 3 in an electrode tank (1030), wherein the positive electrode units and negative units are staggered throughout the unit, each separated by an isolating body 1020, and wherein the anode collecting current terminal 1051 of the positive electrode unit and the cathode collecting current terminal 1052 of the negative electrode unit, placed at lateral positions, are used to be the collecting current terminals for inputting/outputting current.

10. The reserve power supply of claim 3, further comprising:
a negative electrode unit comprising a cathode electrode plate (1012) having cathode collecting current terminals (1042) at two sides, an auxiliary conductor (1002) having cathode collecting current terminals (1052) connected to the cathode collecting current terminals (1042), and an insulator (103) installed between the cathode electrode plate and the auxiliary conductor (1002),
a positive electrode unit comprising an anode electrode plate (1011) having anode collecting current terminals (1041) at two sides, an auxiliary conductor (1001) having anode collecting current terminals (1051) connected to the anode collecting current terminals (1041), and an insulator (103) installed between the anode electrode plate and the auxiliary conductor (1001);
wherein the negative electrode unit is installed at the cathode electrode plate (1012) side with isolating bodies (1020) installed between the cathode electrode plates (1012) and the positive electrode units and wherein the negative electrode unit is installed at the anode electrode plates (1011) side with isolating bodies (1020) installed between the anode electrode plates (1011) and the negative electrode units.

11. The reserve power supply of any preceding claim, wherein the reserve power supply is of a winding type configuration.

## Patentansprüche

1. Reserve-Stromversorgung, umfassend:
ein Paar Elektrodenplatten (101, 1011, 1012), wobei jede Platte (101, 1011, 1012) Sammelstromanschlüsse (104, 1041, 1042) an zwei oder mehr Seiten davon aufweist;
einen Hilfsleiter (100, 1001, 1002), der zwischen dem Paar Elektrodenplatten (101, 1011, 1012) angeordnet ist und Sammelstromanschlüsse (105, 1051, 1052) an zwei oder mehr Seiten davon umfasst; und
einen Isolator (103), der zwischen dem Hilfsleiter (100, 1001, 1002) und den Elektrodenplatten (101, 1011, 1012) angeordnet ist;
wobei entsprechende Sammelstromanschlüsse (104, 1041, 1042) der Platten (101, 1011, 1012) und Sammelstromanschlüsse (105, 1051, 1052) des Hilfsleiters (100, 1001, 1002) miteinander verbunden sind.

2. Reserve-Stromversorgung nach Anspruch 1, wobei der Hilfsleiter (100, 1001, 1002) eine flache Form, Streifen- oder Netzstruktur aufweist, und eine Leitfähigkeit größer als jene der Elektrodenplatten aufweist, und wobei die Elektrodenplatten einen Wirkstoff 120 aufweisen, der auf der Oberfläche aufgebracht ist.

3. Reserve-Stromversorgung nach Anspruch 1 oder Anspruch 2, bei dem ein Paar von Elektrodenplatten (1011) eine positive Elektrodeneinheit umfassend Anodenelektrodenplatten (1011) bildet und ein anderes Paar von Elektrodenplatten (1012), eine negative Elektrodeneinheit umfassend Kathodenelektrodenplatten (1012) bildet, und wobei die positive Elektrodeneinheit von der negativen Elektrodeneinheit durch einen Isolierkörper (1020) getrennt ist, der dazwischen angeordnet ist.

4. Reserve-Stromversorgung nach Anspruch 3, umfassend eine positive Elektrodeneinheit, die zwischen zwei negativen Elektrodeneinheiten angeordnet ist, wobei Isolierkörper zwischen den zwei Seiten der positiven Elektrodeneinheit und der zwei negativen Elektrodeneinheiten angebracht sind.

5. Reserve-Stromversorgung nach Anspruch 3 oder Anspruch 4, umfassend eine negative Elektrodeneinheit zwischen zwei positiven Elektrodeneinheiten, wobei Isolierkörper (1020) zwischen den zwei Seiten der negativen Elektrodeneinheit und der zwei positiven Elektrodeneinheiten angebracht sind.

6. Reserve-Stromversorgung nach Anspruch 4, wobei das Paar Elektrodenplatten Anodenelektrodenplatten (1011) sind, wobei die Reserve-Stromversorgung ferner zwei negative Elektrodeneinheiten umfasst, jeweils umfassend eine Kathodenelektrodenplatte (1012) umfassend Kathodensammelstromanschlüsse (1042) an zwei Seiten, einen Hilfsleiter (1002) umfassend Kathodensammelstromanschlüsse (1052), der mit den Kathodensammelstromanschlüssen (1042) verbunden ist, und einen Isolator, der zwischen der Kathodenelektrodenplatte und dem Hilfsleiter (1002) angebracht ist;
wobei die negativen Elektrodeneinheiten auf jeder Seite der Anodenelektrodenplatten (1011) angebracht sind, wobei Isolierkörper (1020) zwischen den Anodenelektrodenplatten (1011) und den negativen Elektrodeneinheiten angebracht sind.

7. Reserve-Stromversorgung nach Anspruch 5, wobei das Paar von Elektrodenplatten Kathodenelektrodenplatten (1012) sind, die Reserve-Stromversorgung ferner umfassend zwei positive Elektrodeneinheiten, jeweils umfassend eine Anodenelektrodenplatte (1011) umfassend Anodensammelstromanschlüsse (1041) an zwei Seiten, einen Hilfsleiter (1001) umfassend Anodensammelstromanschlüsse (1051), die mit den Anodensammelstromanschlüssen (1041) verbunden sind, und einen Isolator, der zwischen der Anodenelektrodenplatte und dem Hilfsleiter (1001) angebracht ist;
wobei die positiven Elektrodeneinheiten auf jeder Seite der Kathodenelektrodenplatten (1012) angebracht sind, wobei Isolierkörper (1020) zwischen den Kathodenelektrodenplatten (1012) und den positiven Elektrodeneinheiten angebracht sind.

8. Reserve-Stromversorgung, die jeweils mindestens zwei der positiven Elektrodeneinheiten und der negativen Elektrodeneinheiten nach Anspruch 3 in einem Elektrodentank (1030) umfasst, wobei die positiven Elektrodeneinheiten und die negativen Einheiten in der gesamten Einheit versetzt angeordnet sind, jeweils getrennt durch einen Isolierkörper 1020, und wobei der Anodensammelstromanschluss 1051 der positiven Elektrodeneinheit und der Kathodensammelstromanschluss 1052 der negativen Elektrodeneinheit, die an einem Zwischenabschnitt angeordnet sind, als Sammelstromanschlüsse zum Eingeben/Ausgeben von Strom verwendet werden.

9. Reserve-Stromversorgung, die jeweils mindestens zwei der positiven Elektrodeneinheiten und der negativen Elektrodeneinheiten nach Anspruch 3 in einem Elektrodentank (1030) umfasst, wobei die positiven Elektrodeneinheiten und die negativen Einheiten in der gesamten Einheit versetzt angeordnet sind, jeweils getrennt durch einen Isolierkörper 1020, und wobei der Anodensammelstromanschluss 1051 der positiven Elektrodeneinheit und der Kathodensammelstromanschluss 1052 der negativen Elektrodeneinheit, die an seitlichen Positionen angeordnet sind, als Sammelstromanschlüsse zum Eingeben/Ausgeben von Strom verwendet werden.

10. Reserve-Stromversorgung nach Anspruch 3, ferner umfassend:
eine negative Elektrodeneinheit umfassend eine Kathodenelektrodenplatte (1012) umfassend Kathodensammelstromanschlüsse (1042) an zwei Seiten, einen Hilfsleiter (1002) umfassend Kathodensammelstromanschlüsse (1052), die mit den Kathodensammelstromanschlüssen (1042) verbunden sind, und einen Isolator (103), der zwischen der Kathodenelektrodenplatte und dem Hilfsleiter (1002) angebracht ist, wobei eine positive Elektrodeneinheit eine Anodenelektrodenplatte (1011) umfassend Anodensammelstromanschlüsse (1041) an zwei Seiten, einen Hilfsleiter (1001) umfassend Anodensammelstromanschlüsse (1051), die mit den Anodensammelstromanschlüssen (1041) verbunden sind, und einen Isolator (103), der zwischen der Anodenelektrodenplatte und dem Hilfsleiter (1001) angebracht ist, umfasst;
wobei die negative Elektrodeneinheit an der Seite der Kathodenelektrodenplatten (1012) mit Isolierkörpern (1020) zwischen den Kathodenelektrodenplatten (1012) und den positiven Elektrodeneinheiten angebracht ist und wobei die negative Elektrodeneinheit an der Seite der Anodenelektrodenplatten (1011) angebracht ist, wobei Isolierkörper (1020) zwischen den Anodenelektrodenplatten (1011) und den negativen Elektrodeneinheiten angebracht sind.

11. Reserve-Stromversorgung nach einem vorhergehenden Anspruch, wobei die Reserve-Stromversorgung eine Wickeltypkonfiguration aufweist.

## Revendications

1. Bloc d'alimentation de réserve comprenant :
une paire de plaques d'électrodes (101, 1011, 1012), chaque plaque (101, 1011, 1012) comprenant des bornes de collecte de courant (104, 1041, 1042) sur deux de ses côtés ou plus ;
un conducteur auxiliaire (100, 1001, 1002) disposé entre la paire de plaques d'électrodes (101, 1011, 1012) et comprenant des bornes de collecte de courant (105, 1051, 1052) sur deux de ses côtés ou plus ; et
un isolant (103) disposé entre le conducteur auxiliaire (100, 1001, 1002) et les plaques d'électrode (101, 1011, 1012) ;
dans lequel les bornes de collecte de courant correspondantes (104, 1041, 1042) des plaques (101, 1011, 1012) et les bornes de collecte de courant (105, 1051, 1052) du conducteur auxiliaire (100, 1001, 1002) sont connectées les unes aux autres.

2. Bloc d'alimentation de réserve selon la revendication 1, dans lequel le conducteur auxiliaire (100, 1001, 1002) est une bande ou un treillis de forme plate, et a une conductivité supérieure à celle des plaques d'électrodes, et dans lequel les plaques d'électrodes ont une substance active 120 appliquée sur la surface.

3. Bloc d'alimentation de réserve selon la revendication 1 ou la revendication 2, dans lequel une paire de plaques d'électrodes (1011) forme une unité d'électrodes positives comprenant des plaques d'électrodes anodes (1011) et une autre paire de plaques d'électrodes (1012) forme une unité d'électrodes négatives comprenant des plaques d'électrodes cathodes (1012), et dans lequel l'unité d'électrodes positives est séparée de l'unité d'électrodes négatives par un corps isolant (1020) pris en sandwich entre elles.

4. Bloc d'alimentation de réserve selon la revendication 3, comprenant une unité d'électrodes positives entre les deux unités d'électrodes négatives, avec les organes d'isolement installés entre les deux côtés de l'unité d'électrodes positives et les deux unités d'électrodes négatives.

5. Bloc d'alimentation de réserve selon la revendication 3 ou la revendication 4, comprenant une unité d'électrodes négatives entre deux unités d'électrodes positives, avec des corps isolant (1020) installés entre les deux côtés de l'unité d'électrodes négatives et les deux unités d'électrodes positives.

6. Bloc d'alimentation de réserve selon la revendication 4, dans lequel les deux plaques d'électrodes sont des plaques d'électrodes anodes (1011), le bloc d'alimentation de réserve comprenant en outre deux unités d'électrodes négatives, chacune comprenant une plaque d'électrodes cathodes (1012) ayant des bornes de collecte de courant cathodes (1042) des deux côtés, un conducteur auxiliaire (1002) ayant des bornes de collecte de courant cathodes (1052) connectées aux bornes de collecte de courant cathodes (1042), et un isolant installé entre la plaque d'électrodes cathodes et le conducteur auxiliaire (1002) ;
dans lequel les unités d'électrodes négatives sont installées de part et d'autre des plaques d'électrodes anodes (1011) avec des corps isolants (1020) installés entre les plaques d'électrodes anodes (1011) et les unités d'électrodes négatives.

7. Bloc d'alimentation de réserve selon la revendication 5, dans laquelle la paire de plaques d'électrodes sont des plaques d'électrodes cathodes (1012), le bloc d'alimentation de réserve comprenant en outre deux unités d'électrodes positives, chacune comprenant une plaque d'électrodes anodes (1011) comportant des bornes de collecte de courant anodes (1041) des deux côtés, un conducteur auxiliaire (1001) ayant des bornes de collecte de courant anodes (1051) connectées aux bornes de collecte de courant anodes (1041), et un isolant installé entre la plaque d'électrodes anodes et le conducteur auxiliaire (1001) ;
dans lequel les unités d'électrodes positives sont installées de part et d'autre des plaques d'électrodes cathodes (1012) avec des corps isolants (1020) installés entre les plaques d'électrodes cathodes (1012) et les unités d'électrodes positives.

8. Bloc d'alimentation de réserve, comprenant au moins deux des unités d'électrodes positives et des unités d'électrodes négatives selon la revendication 3 dans un réservoir d'électrodes (1030), dans lequel les unités d'électrodes positives et les unités négatives sont réparties dans toute l'unité, chacune séparée par un corps isolant (1020), et dans lequel la borne de collecte de courant anode (1051) de l'unité d'électrodes positives et la borne de collecte de courant cathode (1052) de l'unité d'électrodes négatives, placées au niveau d'une partie intermédiaire, sont utilisées pour être les bornes de collecte de courant pour le courant entrant/sortant.

9. Bloc d'alimentation de réserve, comprenant au moins deux des unités d'électrodes positives et des unités d'électrodes négatives selon la revendication 3 dans un réservoir d'électrodes (1030), dans lequel les unités d'électrodes positives et les unités négatives sont réparties dans toute l'unité, chacune séparée par un corps isolant (1020), et dans lequel la borne de collecte de courant anode (1051) de l'unité d'électrodes positives et la borne de collecte de courant cathode (1052) de l'unité d'électrodes négatives, placées dans des positions latérales, sont utilisées pour être les bornes de collecte de courant pour le courant entrant/sortant.

10. Bloc d'alimentation de réserve selon la revendication 3, comprenant en outre :
une unité d'électrodes négatives comprenant une plaque d'électrodes cathodes (1012) ayant des bornes de collecte de courant cathodes (1042) sur les deux côtés, un conducteur auxiliaire (1002) ayant des bornes de collecte de courant cathodes (1052) connectées aux bornes de collecte de courant cathodes (1042), et un isolant (103) installé entre la plaque d'électrodes cathodes et le conducteur auxiliaire (1002), une unité d'électrodes positives comprenant une plaque d'électrodes anodes (1011) ayant des bornes de collecte de courant anodes (1041) sur les deux côtés, un conducteur auxiliaire (1001) ayant des bornes collecte de courant anodes (1051) connectées aux bornes de collecte de courant anodes (1041), et un isolateur (103) installé entre la plaque d'électrodes anodes et le conducteur auxiliaire (1001) ;
dans lequel l'unité d'électrodes négatives est installée sur le côté de la plaque d'électrodes cathodes (1012) avec des corps isolants (1020) installés entre les plaques d'électrodes cathodes (1012) et les unités d'électrodes positives et dans lequel l'unité d'électrodes négatives est installée sur le côté des plaques d'électrodes anodes (1011) avec des corps isolants (1020) installés entre les plaques d'électrodes anodes (1011) et les unités d'électrodes négatives.

11. Bloc d'alimentation de réserve selon l'une quelconque des revendications précédentes, dans laquelle le bloc d'alimentation de réserve a une configuration de type bobinage.
